# EUROPEAN PATENT APPLICATION

(11) **EP 4 708 213 A1**
(43) Date of publication of application: **11.03.2026**
(21) Application number: 24199195.9
(22) Date of filing: 09.09.2024
(51) Int. Cl.: G06V 10/24, G06T 19/00, G06V 10/26, G06V 10/44, G06V 10/70

(54) **METHOD OF GENERATING ORTHOIMAGES**

(71) Applicant: Hexagon Innovation Hub GmbH, 9435 Heerbrugg (CH)
(72) Inventor: VAN DER ZWAN, Elmar Vincent, 9428 Walzenhausen (CH); METZLER, Bernhard, 6850 Dornbirn (AT); GRACZYK, Grzegorz, 91-843 ód (PL); ZWIERZCHOWSKI, Jaroslaw, 25-409 Kielce (PL)
(74) Representative: Kaminski Harmann

(57) **Abstract**

The invention pertains to a computer-implemented method (100) for generating an orthoimage of a 3D structure, the method comprising receiving (110) structure data comprising object data related to wanted objects and unwanted objects, selecting (120), based on the structure data, a mapping area including at least a part of the 3D structure, selecting (140) mapping content comprising one or more wanted objects, and generating (150) an orthoimage showing the mapping content, wherein selecting (140) the mapping content comprises, at least partially automatically, specifying (130) a 3D mapping volume enclosing the mapping area, wherein the selected mapping content comprises objects that are located in the mapping volume, and/or performing a segmentation (135) of the surface data to identify wanted and/or unwanted objects.

## Description

The present invention pertains to a computer-implemented method of generating orthoimages of façades and other three-dimensional surfaces. An orthoimage is a geometrically rectified image with normalized scale. To generate an orthographic image, one or multiple input images are orthogonally projected onto a common surface. A main feature of an orthoimage is its suitability for metric measurements directly on the image.

Typically, orthoimages are generated from 3D models. Orthoimages are generated for specific mapping areas. This is valid for both classical orthophotos captured from a nadir perspective as well as for other orthoimages such as orthofaçades (vertical maps of buildings). Orthophotos are typically specified using the horizontal area that they cover. Orthofaçades are more diverse and therefore usually require more user input to uniquely specify. Apart from the mapping area and orthogonal projection direction (typically in the horizontal plane), an appropriate mapping volume needs to be specified to specify the mapping content- i.e., which foreground and background objects should be included or excluded from the image.

Typically, the specification of an orthofaçade relies on defining a target mapping area and the mapping volume to include in a 3D Viewer. This often relies on creating a 3D bounding box defining the area of interest, and manually moving and rotating it to match with the target façade. Tools can be used to increase the accuracy of such a selection. Manually selecting three or more points of a point cloud can be used to define a plane, which can be used as a target in the alignment process. For more complex shapes, which cannot be expressed as a bounding box, sometimes a separate, manual masking process is used to indicate mapping areas that should be used for the orthofaçade image.

This manual work is tedious and error prone. It would therefore be desirable to provide a method that facilitates generating orthoimages of façades and other predominantly vertical objects.

It is therefore an object of the present invention to provide an improved method of generating an orthoimage of a three-dimensional surface.

It is a particular object to provide such a method, wherein the number of manual steps is reduced or wherein the method can be performed fully automated.

At least one of these objects is achieved by the computer-implemented method according to claim 1, and/or the dependent claims of the present invention.

The invention pertains to a computer-implemented method for generating an orthoimage of a three-dimensional (3D) structure. In particular, this 3D structure has predominantly vertical surfaces. For instance, the 3D structure can be façade or a building having one or more façades. The method, which is fully or partially performed in a computer system, comprises:
- receiving structure data relating to the 3D structure, the structure data comprising at least first object data related to wanted objects and second object data related to unwanted objects, wherein wanted objects comprise features of the 3D structure, and unwanted objects comprise objects that are situated near the 3D structure and are not part of the 3D structure;
- selecting, based on the structure data and at least partially automatically, a mapping area, which includes at least a part of the 3D structure;
- selecting mapping content comprising one or more wanted objects; and
- generating an orthoimage showing the mapping content.

According to the invention, selecting the mapping content comprises at least partially automatically
- specifying a 3D mapping volume enclosing the mapping area, wherein the selected mapping content comprises wanted (and possibly also some unwanted) objects that are located in the mapping volume; and/or
- performing a segmentation of the surface data to identify wanted and unwanted objects.

According to some embodiments of the method, selecting the mapping content at least comprises specifying the 3D mapping volume, wherein the 3D mapping volume is specified to include all wanted objects that are situated in front of or behind the mapping area.

Accordingto some embodiments, the 3D mapping volume is specified to exclude at least a subset of unwanted objects that are situated in front of or behind the mapping area. For instance, the 3D mapping volume may be specified to include no unwanted objects.

According to some embodiments, specifying the 3D mapping volume comprises automatically creating a suggested mapping volume, providing the suggested mapping volume to a user on a display, and receiving a validation from the user. In particular, specifying the 3D mapping volume comprises receiving user input with adaptations to the suggested mapping volume, and automatically generating the 3D mapping volume is also based on the user input.

In other embodiments, the 3D mapping volume may be specified fully automatically.

According to some embodiments of the method, selecting the mapping content at least comprises the segmentation of the structure data, wherein all identified wanted objects that are situated in front of or behind the mapping area, are selected as mapping content, particularly wherein no unwanted objects are selected as mapping content.

According to some embodiments, pattern recognition is used for identifying the wanted objects and the unwanted objects. According to some embodiments, a trained neural network is used for identifying the wanted objects and the unwanted objects.

According to some embodiments, selecting the mapping content comprises providing the identified wanted and unwanted objects on a display to a user and receiving feedback from the user. For instance, the identified wanted and unwanted objects may be provided on the display to the user in a graphical user interface, which provides a selection functionality to the user, enabling the user to select or deselect identified wanted and/or unwanted objects, wherein the feedback comprises the selected or deselected identified wanted and/or unwanted objects. Optionally, the user can be enabled to change wanted objects into unwanted objects and unwanted objects into wanted objects.

According to some embodiments of the method, selecting the mapping area comprises automatically selecting a suggested mapping volume, providing the suggested mapping volume to a user on a display, and receiving a validation from the user. For instance, selecting the mapping area comprises receiving user input with adaptations to the suggested mapping area, and automatically generating the mapping area is also based on the user input.

According to some embodiments of the method, the three-dimensional object comprises a façade of at least one building, the wanted objects including façade features, the unwanted objects including features situated in front of the façade. For instance, the façade features may include at least a subset of balconies, oriels, jutties, gazebos, doors, windows, sills, rain pipes, spouts, eaves and plastering. The unwanted objects may include trees, cars, people, street furniture, and/or façade features of other buildings.

According to some embodiments, the 3D structure comprises façades of a plurality of sides of the same building.

The invention also pertains to a computer program product comprising program code having computer-executable instructions for performing such a method.

The invention in the following will be described in detail by referring to exemplary embodiments that are accompanied by figures, in which:
- Fig. 1: shows a façade of a building as an example of a 3D surface;
- Fig. 2: shows an example of an orthoimage of the façade of Fig. 1;
- Fig. 3: shows a building as a first example of a complex 3D surface;
- Fig. 4: shows another building as a second example of a complex 3D surface;
- Fig. 5: shows a mapping area and a mapping volume applied to the 3D surface of Fig. 1; and
- Fig. 6: shows a flow chart illustrating an exemplary embodiment of a method for generating an orthoimage according to the invention.

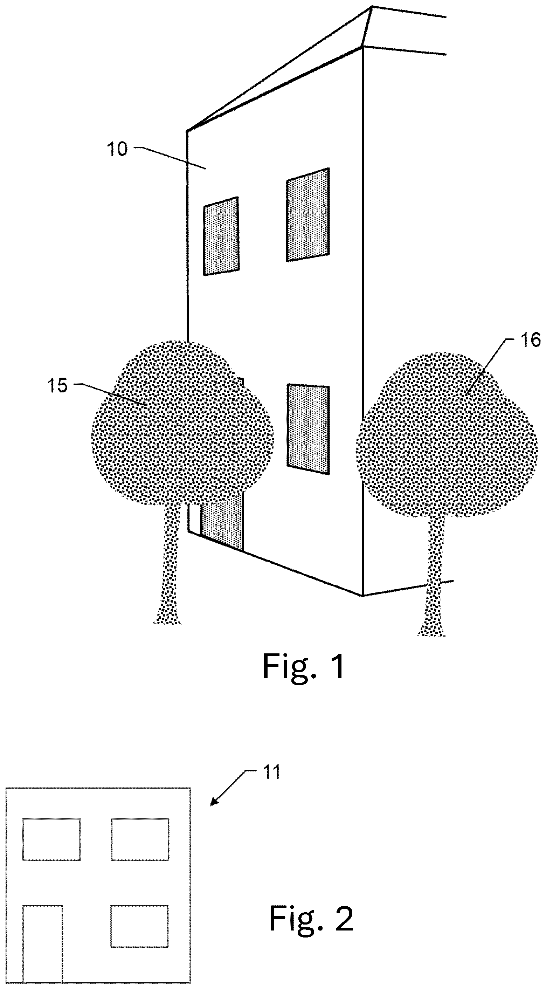

Figure 1 shows a façade 10 of a building as an example of a three-dimensional (3D) surface of which an orthographic image is to be generated. As an example of obstructions for the orthographic image two trees 15, 16 are depicted. A first tree 15 stands in front of the building, blocking the frontal view on the façade 10. A second tree 16 stands beside the building, not blocking the frontal view on the façade 10.

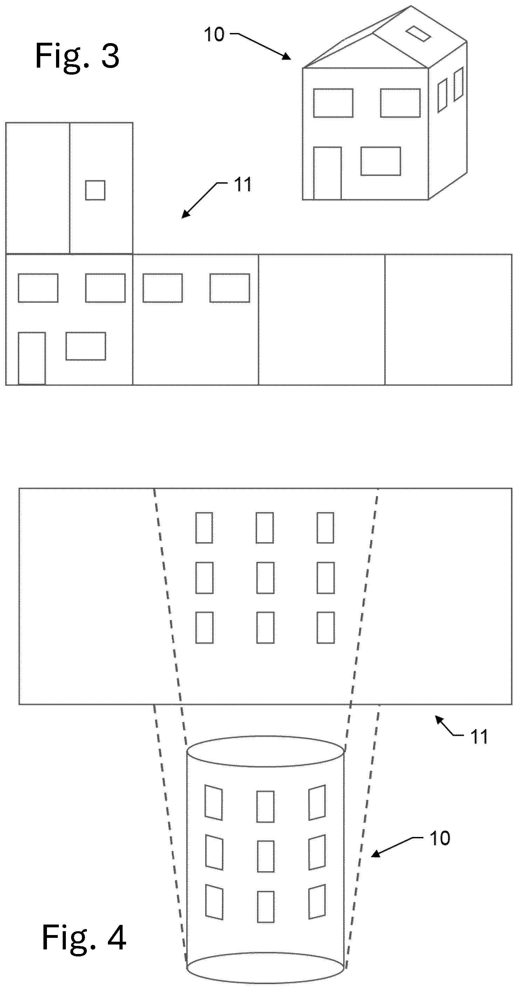

Figure 2 shows an example of an orthographic image 11 of the façade 10 of Figure 1, i.e., a typical orthofaçade created using a planar projection. As illustrated in Figures 3 and 4, the orthographic image 11 also can be an orthoimage created for a more complex 3D surface area. Examples of such complex 3D surface areas are the combined façade and roof areas of a house, as shown in Figure 3, or the surface area of a round tower, as shown in Figure 4.

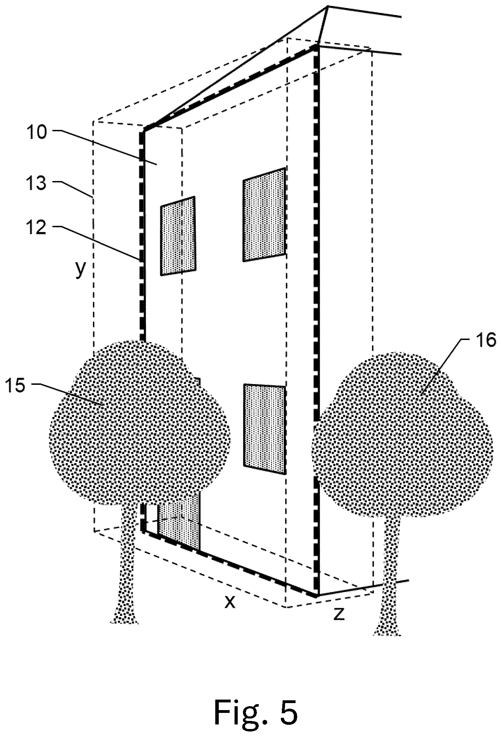

Figure 5 shows the façade of Figure 1 with a mapping area 12 and a mapping volume 13 applied thereto. The mapping area 12 defines the projection surface for the orthoimage and the orthoimage borders. In its simplest form, the mapping area 12 can be a plane, but it can be any other geometrical shape or combination thereof. Examples include the surface area of a cube, a cylinder, or conic shapes, etc. The projection direction is orthogonal to the mapping area 12. For non-planar surfaces - e.g., the complex 3D surfaces of Figures 3 and 4 - the projection direction is not uniform over the entire orthoimage.

Selecting the mapping area 12 comprises the selection of a mapping surface, in the shown example the basically planar surface of the façade 10. In the more complex examples of Figures 3 and 4, the mapping area 12 would comprise a set of adjoint planar surfaces or a cylindric surface, respectively. Appropriate borders for the mapping area 12 need to be selected, e.g., to exclude obstacles such as tree 16 from the mapping area 12.

Some embodiments of the present invention relate to a method based on machine learning for automatically selecting the mapping area 12 and/or the mapping content from a set of captured images. In some embodiments, an Artificial Intelligence (AI) model simplifies orthoimage generation by automatically or semi-automatically selecting one or both of mapping area and mapping content for generating a measurable orthoimage. The AI model is trained using a large database of sample mapping data and associated orthoimages. Based on its database of example orthoimages, the AI model suggests mapping area and/or mapping content for new mapping data. Mapping areas are retrieved by the AI model using semantic and/or instance segmentation of suitable surfaces in the mapping data. The segmented surfaces can be surface types such as planes, cylinder surfaces, etc.

As shown here, a mapping volume 13 may be specified by defining a front surface and a back surface where all objects between the front surface and the back surface are mapped onto the mapping area 12. For example, in case the surface of the mapping area 12 is a plane, this plane is shifted - in the direction of the normal - by a first distance to the front defining the front surface and by a second distance to the back defining the back surface. Thus, the mapping volume 13 is defined by its edges x, y and z, where x and y are parallel to the borders of the mapping area 12, and the length of z corresponds to the sum of the first distance and the second distance.

The front and back surfaces should be selected so as to ensure that all features of the façade 10 are included within the mapping volume 13, whereas objects not belonging to the façade 10, such as the tree 15 in front of the façade, are excluded. As shown in the example of Figure 5, the façade features may include doors and windows. Additionally, not shown here, the façade features may also include other 3D objects that can be considered part of façades, such as balconies, oriels, jutties, gazebos, sills, rain pipes, spouts, eaves and plastering. Objects that one might want to exclude from the mapping volume 13 generally include objects that block the view on the façade, such as, e.g., vegetation, parked cars, people and street furniture. Also features of other façades, e.g., parts of the same or neighbouring buildings, that are not wanted to be included in the orthoimage should be excluded from the mapping volume 13.

The selection of the front and back surfaces can be based on standard parameters. For instance, the first distance and the second distance may both have a standard value, e.g., 50 cm or 1 m. Alternatively, instead of using standard parameters, the point distribution of the 3D model around the mapping surface area can be statistically analysed. Based on this analysis, the distance of the front surface and the distance of the back surface can be derived. Also, the mapping volume 14 need not be box-shaped as shown here but may have a more complex geometry.

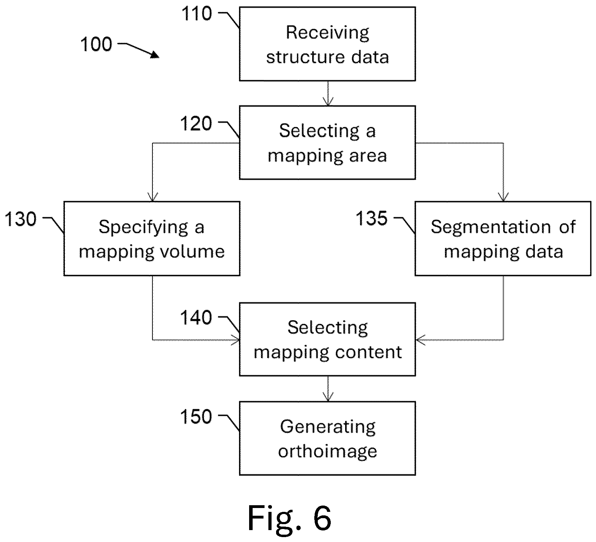

Figure 6 shows a flow chart illustrating an exemplary embodiment of a method 100 of generating an orthoimage of a 3D surface, such as a façade.

Generating a measurable orthoimage requires mapping data and specifying the mapping area and mapping content for the orthoimage. The method 100 starts with receiving 110 the mapping data. The mapping data comprise a 3D representation of a scene or object. Examples include 3D models such as a point cloud of a building or a triangular mesh of a construction site.

Next, a mapping area is selected 120. Selecting the mapping area comprises the selection of a mapping surface, e.g., a planar surface, a cylindric surface, or a set of adjoint planar surfaces. Moreover, it comprises selecting appropriate borders for the mapping area. According to some embodiments of the method 100, the selection 120 of the mapping area can be based on machine learning, in particular on deep learning. In one embodiment the underlying 3D-model is a point cloud and semantic segmentation with different surfaces classes (i.e., planar, cylindric, etc.) is applied. Here, architectures for neural networks such as PointNet, PointCNN, or KPconv can be applied.

Based on instance segmentation, the point cloud can be split-up into point groups, where each point group represents a candidate for the mapping area. Optionally, a geometric primitive is fit to the corresponding point group, e.g., by means of least squares adjustment. The candidate with the largest point group can be automatically selected as mapping area by the algorithm or, alternatively, a set of candidates can be presented to the user for manual selection.

In a next step, the mapping content is selected 140. The mapping content is a sub-selection of the total mapping data and will be included in the orthoimage. Optionally, it can also comprise all the received mapping data. The mapping content is projected onto the selected mapping area to create one or more measurable 2D orthoimages. If the mapping surface area is a complex 3D structure (surfaces of a cube, cone, etc.), the mapping surface area is unfolded or unrolled on a 2D plane.

Selecting 140 the mapping content refers to selecting from the mapping data the content that is mapped onto the mapping area. This selection can be done geometry-based (step 130) and/or object-based (step 135).

Geometry-based, the mapping content can be selected by specifying 130 a mapping volume. Only content that is inside the mapping volume will be included in the orthoimage. Typically, the mapping content would be the outside of an object such as a building. However, it could also be the inside of a structure. An example is an orthoimage of one or more of the inside walls of a room or hall, e.g., a church.

A simple geometrical way to specify 130 the mapping volume is to specify a front surface and a back surface where all objects between the front surface and back surface are mapped onto the mapping surface. The selection of the front and back surfaces can be based on standard parameters. For example, in case the mapping surface area is a plane, this plane is shifted 1 m in the direction of the normal to the front defining the front surface and 1m to the back defining the back surface. All contents of the underlying mapping data in between the front and the back plane are mapped onto the mapping area. Analogously, in case the mapping surface is a cylinder with centre C and radius R, the front surface can be defined with centre C and radius R + 1 m and the back surface can be defined with centre C and radius R-1 m.

Alternatively, instead of using standard parameters, the point distribution of the 3D model around the mapping surface area can be statistically analysed. Based on this analysis, the distance of the front surface and the distance of the back surface can be derived.

The mapping-content selection 140 can be also based on segmentation 135 of the mapping data and/or of scene imagery to include the relevant contents and to remove objects that are not relevant for the measurable orthoimages, such as vegetation, people, or cars. For example, when creating an orthofaçade, 3D points belonging to the façade are included in the orthoimage based on semantic or instance segmentation, whereas other 3D points are not included. In combination with a mapping-volume selection, this may include the automatic removal of unwanted objects inside the mapping volume that are not intended to be part of the orthographic image.

In one embodiment, the mapping-area and mapping-content selection 120, 140 can be based on semantic segmentation of images, e.g., in case the object is a building, and an orthographic image of a façade is to be generated. In this case, the semantic segmentation of building façades can be applied to a set of images and the segmented areas mapped onto the 3D model, e.g., a triangular mesh. Based on that, all triangles being part of the segmented image areas are selected and a geometric primitive is fit to this set of triangles.

Optionally, the selection 120, 140 of the mapping surface and/or mapping content may be supported by a user with one or more single clicks to aid the AI model. Instance segmentation can be used to extend the user selection, so that the mapping surface and/or content can be adapted accordingly. User input with single clicks can be used to adapt, include, or remove features. For instance, after performing semantic segmentation to isolate all points of vegetation and performing instance segmentation, i.e., splitting up the points/mesh of vegetation to individual objects, the user can click onto one point of an individual tree to eliminate the whole object from the mapping content.

Optionally, the mapping surface from the AI model may be refined using stand-alone geometrical processing as a post-processing step. A geometrical shape such as a plane or cylinder is fitted to the proposed mapping surface to guarantee that the mapping surface consists of one or multiple geometrical shapes.

Optionally, the proposed mapping area and mapping content may be displayed in a 3D view. The mapping area may be selected based also on the user viewpoint in the 3D view. The mapping area and the mapping content can be graphically visualized. The user can change the mapping area by dragging it around or by selecting alternative proposed mapping areas visualized in the 3D view, for instance using colours. The user can suggest a mapping volume, e.g., by moving a front surface back or forth. Objects that were included or excluded from the mapping content using segmentation are highlighted in the 3D view, e.g., by showing objects that were removed in red. In parallel to the 3D view, a preview of the orthoimage is created that reflects all changes in real-time. The user can simply add and remove additional object by clicking on them in the 3D-view or on the orthoimage preview.

Optionally, a Building Information Model (BIM), a 3D city model, or CAD models can be used for selecting 120, 140 the mapping area and/or content. This requires a previous alignment of the mapping data with the BIM, city or CAD model, for instance using georeferencing. An AI model may have access to the respective model and use it for selection of the mapping area and/or mapping content. The orthoimage is generated 150 using the mapping data. User interaction can happen either on the BIM, city or CAD model, or on the mapping data, or on a combination of both.

Finally, using the selected 140 mapping content, an orthoimage can be generated 150. Optionally, multiple orthoimages covering the different sides of an object are proposed to the user and generated simultaneously. Optionally, the user may guide an AI model to select multiple orthoimages covering the different sides of an object by drawing a polygon on a top view of the mapping data.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for generating an orthoimage (11) of a three-dimensional structure (10), particularly wherein the three-dimensional structure (10) has predominantly vertical surfaces, the method comprising:
- receiving (110) structure data relating to the three-dimensional structure (10), the structure data comprising at least first object data related to wanted objects and second object data related to unwanted objects, wherein wanted objects comprise features of the three-dimensional structure (10), and unwanted objects comprise objects that are situated near the three-dimensional structure (10) and are not part of the three-dimensional structure (10);
- selecting (120), based on the structure data and at least partially automatically, a mapping area (12), the mapping area including at least a part of the three-dimensional structure (10);
- selecting (140) mapping content, the mapping content comprising one or more wanted objects; and
- generating (150) an orthoimage showing the mapping content,
**characterized in that**
selecting (140) the mapping content comprises, at least partially automatically:
- specifying (130) a three-dimensional mapping volume (13) enclosing the mapping area (12), wherein the selected mapping content comprises wanted objects that are located in the mapping volume (13); and/or
- performing a segmentation (135) of the surface data to identify wanted and/or unwanted objects.

2. Method (100) according to claim 1, wherein selecting (140) the mapping content at least comprises specifying (130) the three-dimensional mapping volume (13), wherein the three-dimensional mapping volume (13) is specified (130) to include all wanted objects that are situated in front of or behind the mapping area (12).

3. Method (100) according to claim 2, wherein the three-dimensional mapping volume (13) is specified to exclude at least a subset of unwanted objects that are situated in front of or behind the mapping area (12), particularly wherein the three-dimensional mapping volume (13) is specified (130) to include no unwanted objects.

4. Method (100) according to claim 2 or claim 3, wherein specifying (130) the three-dimensional mapping volume (13) comprises automatically creating a suggested mapping volume, providing the suggested mapping volume to a user on a display, and receiving a validation from the user, particularly wherein specifying (130) the three-dimensional mapping volume (13) comprises receiving user input with adaptations to the suggested mapping volume, and automatically generating the three-dimensional mapping volume (13) is also based on the user input.

5. Method (100) according to claim 2 or claim 3, wherein the three-dimensional mapping volume (13) is specified (130) fully automatically.

6. Method (100) according to any one of the preceding claims, wherein selecting (140) the mapping content at least comprises the segmentation (135) of the structure data, wherein all identified wanted objects that are situated in front of or behind the mapping area (12), are selected (140) as mapping content, particularly wherein no unwanted objects are selected (140) as mapping content.

7. Method (100) according to claim 6, wherein pattern recognition is used for identifying the wanted objects and the unwanted objects.

8. Method (100) according to claim 6 or claim 7, wherein a trained neural network is used for identifying the wanted objects and the unwanted objects.

9. Method (100) according to any one of claims 6 to 8, wherein selecting (140) the mapping content comprises providing the identified wanted and unwanted objects on a display to a user and receiving a feedback from the user.

10. Method (100) according to claim 9, wherein the identified wanted and unwanted objects are provided on the display to the user in a graphical user interface, which provides a selection functionality to the user, enabling the user to select or deselect identified wanted and/or unwanted objects, wherein the feedback comprises the selected or deselected identified wanted and/or unwanted objects, particularly wherein the user is enabled to change wanted objects into unwanted objects and unwanted objects into wanted objects.

11. Method (100) according to any one of the preceding claims, wherein selecting (120) the mapping area (12) comprises automatically selecting a suggested mapping volume, providing the suggested mapping volume to a user on a display, and receiving a validation from the user, particularly wherein selecting (120) the mapping area (12) comprises receiving user input with adaptations to the suggested mapping area, and automatically generating the mapping area (12) also based on the user input.

12. Method (100) according to any one of the preceding claims, wherein the three-dimensional structure (10) comprises a façade of at least one building, the wanted objects including façade features, the unwanted objects including features situated in front of the façade.

13. Method (100) according to claim 12, wherein
- the façade features include at least a subset of balconies, oriels, jutties, gazebos, doors, windows, sills, rain pipes, spouts, eaves and plastering; and/or
- the unwanted objects include trees, cars, people, street furniture, and/or façade features of other buildings.

14. Method (100) according to claim 12 or claim 13, wherein the three-dimensional structure (10) comprises façades of a plurality of sides of the same building.

15. Computer program product comprising program code having computer-executable instructions for performing the method (100) according to any one of the preceding claims.
